# EUROPEAN PATENT SPECIFICATION

(11) **EP 4 559 316 B1**
(45) Date of publication and mention of the grant of the patent: **23.09.2026**
(21) Application number: 23843068.0
(22) Date of filing: 21.07.2023
(51) Int. Cl.: A21C 9/08, B65G 47/52

(54) **FOLDING/LAMINATING APPARATUS FOR DOUGH SHEET**
FALT-/LAMINIERVORRICHTUNG FÜR TEIGBLATT
APPAREIL DE PLIAGE/STRATIFICATION POUR FEUILLE DE PÂTE À PAIN

(30) Priority: 22.07.2022 JP 2022117395
(43) Date of publication of application: 28.05.2025
(73) Proprietor: Rheon Automatic Machinery Co., Ltd., Utsunomiya-shi, Tochigi 320-0071 (JP)
(72) Inventor: KAMIYAMA, Yudai, Utsunomiya-shi, Tochigi 320-0071 (JP); UCHIKI, Kenta, Utsunomiya-shi, Tochigi 320-0071 (JP); ONOGUCHI, Kazuyoshi, Utsunomiya-shi, Tochigi 320-0071 (JP)
(74) Representative: Huebner, Stefan Rolf
(86) International application number: PCT/JP2023/026767
(87) International publication number: WO 2024/019145

(56) References cited:
- WO-A1-2011/010216
- WO-A1-2021/141546
- CN-A- 1 903 043
- JP-A- 2013 094 082
- JP-A- H0 710 369
- JP-A- S57 133 259
- JP-A- S57 133 259
- JP-A- S62 171 868
- JP-B1- S4 518 730
- JP-Y1- S4 629 272
- TW-A- 201 143 620
- US-A- 4 907 501

## Description

### TECHNICAL FIELD

The present invention relates to a folding/laminating apparatus that laminates a dough sheet such as a bread dough sheet by folding the dough sheet.

### BACKGROUND ART

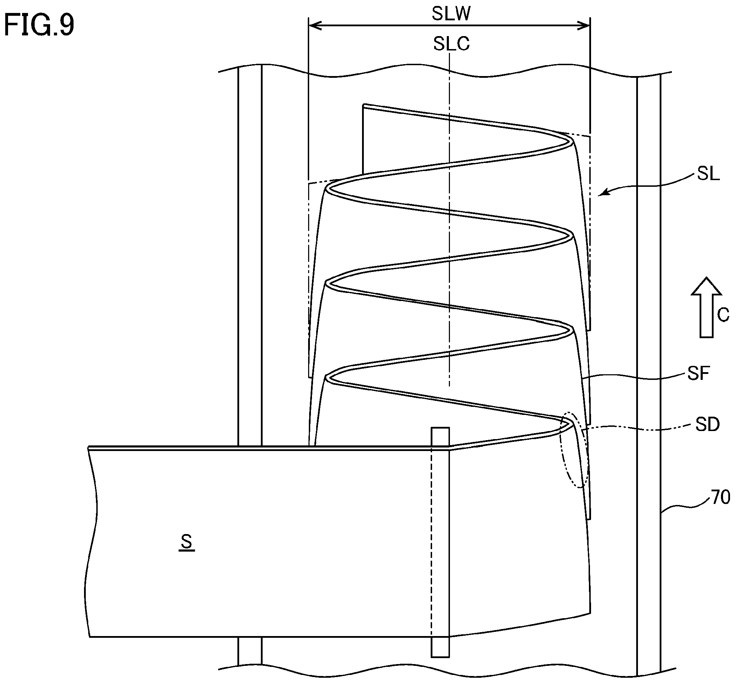

A folding/laminating apparatus has been known, which apparatus includes a laminating conveyor for conveying a dough sheet, such as a bread dough, in a conveying direction, and a discharging conveyor disposed below the laminating conveyor, wherein a position of the dough sheet when the dough sheet is delivered onto the discharging conveyor is reciprocated in the conveying direction and a direction opposite to the conveying direction to form a laminated dough sheet by folding the dough sheet onto the discharging conveyor, the laminated dough sheet being discharged in a discharging direction which is different from the conveying direction (for example, see Patent Document 1). Since the laminated dough sheet is moved in the discharging direction by the discharging conveyor, the dough sheet is laminated while the dough sheet is shifted in the discharging direction (see FIG. 9).

### PRIOR ART

### PATENT DOCUMENTS

Patent Document 1: Japanese Patent Laid-open Publication No. H07-213216
Patent Document 2: Japanese Patent Laid-open Publication No. 2013-094082

TW 201143620 A discloses an automatic continuous dough-sheet folding apparatus comprising a conveying seat, a swinging seat, and a conveyor belt, wherein a continuous dough sheet is conveyed from the conveying seat into the swinging seat. The swinging seat performs forward and backward reciprocating movement, and the dough sheet is driven by paired belt rollers so as to fall onto a conveyor belt disposed at about ninety degrees below the swinging seat. By the swinging movement of the swinging seat and the movement of the conveyor belt, the dough sheet is formed into a continuous Z-shaped folded dough sheet.

From JP S57-133259 A, a cross-lap web manufacturing apparatus is known in which a card web is conveyed by a plurality of conveyor lattices and is folded and laminated onto a floor conveyor arranged to extend orthogonally to the conveying direction. The card web is folded and stacked on the floor conveyor by reciprocating traverse movement of a conveyor lattice so as to form a cross-lapped web. The traverse movement is driven such that a traverse speed of the conveyor lattice is adjusted during forward and backward movement to control the formation of the folded web.

US 4,907,501 A discloses a system for forming a laminate consisting of dough and fat, comprising first and second reducing means, a laminating station, and a plurality of conveyor means for conveying ingoing and outgoing layers. In the laminating station, parts of a dough-and-fat layer are placed on each other to form a further layer, and the conveying directions of different conveyor means may be arranged at right angles or opposed to one another, with the conveyor means arranged essentially in one vertical plane.

### SUMMARY OF THE INVENTION

### PROBLEM TO BE SOLVED BY THE INVENTION

In a folding/laminating apparatus described in the Patent Document 1, a conveying direction for conveying a dough sheet and a discharging direction for discharging a laminated dough sheet are perpendicular to each other. In this folding/laminating apparatus, as shown in FIG. 9, when the dough sheet S is laminated onto the discharging conveyor 70, a folding line SF of the dough sheet S tends to become non-parallel to the discharging direction C. Specifically, a downstream-side edge portion SD of the dough sheet S tends to be pulled back toward a center SLC of a width of the laminated dough sheet SL. As a result, overlapped doughs on opposite sides of the laminated dough sheet SL may become uneven in the discharging direction C.

In a folding/laminating apparatus described in the Patent Document 2, a conveying direction for conveying a dough sheet and a discharging direction for discharging a laminated dough sheet are inclined from each other. This facilitates arranging a folding line SF of the dough sheet parallel to the discharging direction. However, since an inclined angle of an introducing conveyor relative to the discharging conveyor is required to be changed when the number of layers of the laminated dough sheet is changed, structures and operations of the folding/laminating apparatus are relatively complicated. Further, since the introducing conveyor is arranged to be inclined to the discharging conveyor, a relatively large installation space is required for the folding/laminating apparatus.

Thus, an object of the present invention is to provide a folding/laminating apparatus in which a conveying direction for conveying a dough sheet and a discharging direction for discharging a laminated dough sheet are perpendicular to each other, and a folding line of the dough sheet can be easily arranged in parallel to the discharging direction.

### MEANS FOR SOLVING THE PROBLEM

To achieve the object, a folding/laminating apparatus according to claim 1 is provided. According to the present invention, folding/laminating apparatus laminates a dough sheet by folding the dough sheet includes a laminating conveyor which conveys a continuous dough sheet in a conveying direction and includes a downstream end; a discharging conveyor which is disposed below the laminating conveyor, receives the continuous dough sheet from the downstream end of the laminating conveyor, and discharges a laminated dough sheet in a discharging direction perpendicular to the conveying direction, the downstream end of the laminating conveyor being configured to be reciprocated in the conveying direction between a first folding position and a second folding position and a direction opposite to the conveying direction so that the continuous dough sheet is folded onto the discharging conveyor to form the laminated dough sheet on the discharging conveyor; and a guide unit which is reciprocated together with the downstream end of the laminating conveyor, and includes a pair of guide members for guiding the continuous dough sheet from the downstream end of the laminating conveyor onto the discharging conveyor, the pair of guide members being configured to allow a downstream-side edge portion of the continuous dough sheet to pass between the pair of guide members; wherein the guide unit is configured to move the pair of guide members in the direction opposite to the conveying direction to move the downstream-side edge portion of the continuous dough sheet in the direction opposite to the conveying direction beyond the first folding position when the downstream end of the laminating conveyor is moved in the direction opposite to the conveying direction to reach the first folding position, and wherein the guide unit is configured to move the pair of guide members in the conveying direction to move the downstream-side edge portion of the continuous dough sheet in the conveying direction beyond the second folding position when the downstream end of the laminating conveyor is moved in the conveying direction to reach the second folding position.

**In** this folding/laminating apparatus, the conveying direction in which the continuous dough sheet is conveyed and the discharging direction in which the laminated dough sheet is discharged are perpendicular to each other. Further, when the downstream end of the laminating conveyor reaches the first folding position, the guide unit allows the pair of guide members to be moved in the direction opposite to the conveying direction so that the downstream-side edge portion of the dough sheet is moved in the direction opposite to the conveying direction beyond the first folding position. Further, when the downstream end of the laminating conveyor reaches the second folding position, the guide unit allows the pair of guide members to be moved in the conveying direction so that the downstream-side edge portion of the dough sheet is moved in the conveying direction beyond the second folding position. This facilitates arrangement of the folding line of the dough sheet parallel to the discharging direction after the downstream-side edge portion of the dough sheet is pulled back toward the center of the width of the laminated dough sheet.

**In** this embodiment of the folding/laminating apparatus, preferably, the laminating conveyor is configured to increase a speed of a conveyor belt of the laminating conveyor when the pair of guide members is moved for moving the downstream-side edge portion of the continuous dough sheet in the direction opposite to the conveying direction beyond the first folding position and in the conveying direction beyond the second folding position.

**In** an embodiment of the folding/laminating apparatus according to the present invention, preferably, the folding/laminating apparatus further includes an introducing conveyor which is disposed above the laminating conveyor and conveys the continuous dough sheet in the direction opposite to the conveying direction, wherein the introducing conveyor has a downstream end and is configured to deliver the continuous dough sheet from the downstream end of the introducing conveyor onto the laminating conveyor. More preferably, the folding/laminating apparatus further includes a sensor for detecting a position of the continuous dough sheet in the conveying direction when the continuous dough sheet is delivered from the downstream end of the introducing conveyor onto the laminating conveyor.

In this folding/laminating apparatus, the dough sheet can be supplied onto the laminating conveyor in a stable condition.

In an embodiment of the folding/laminating apparatus according to the present invention, preferably, the folding/laminating apparatus further includes a roller between the downstream end of the introducing conveyor and the laminating conveyor for maintaining a position of the continuous dough sheet in the conveying direction when the continuous dough sheet is delivered from the downstream end of the introducing conveyor onto the laminating conveyor.

In an embodiment of the folding/laminating apparatus according to the present invention, preferably, the folding/laminating apparatus further includes a sensor for detecting a position of the continuous dough sheet in the conveying direction when the continuous dough sheet is delivered from the downstream end of the laminating conveyor onto the discharging conveyor.

In an embodiment of the folding/laminating apparatus according to the present invention, the pair of guide members may include a pair of guide rollers, a pair of guide plates, or both.

### BRIEF DESCRIPTION OF THE DRAWINGS

Fig. 1 is a schematic plan view of a folding/laminating apparatus according to the present invention.
Fig. 2 is a schematic front view showing a plurality of conveyors of the folding/laminating apparatus of Fig. 1.
Fig. 3 is a schematic front view showing a roller moving unit and a conveyor moving unit of the folding/laminating apparatus of Fig. 1.
Fig. 4 is a schematic front view showing the plurality of conveyors of the folding/laminating apparatus of Fig. 1.
Fig. 5 is a schematic front view showing the roller moving unit and the conveyor moving unit of the folding/laminating apparatus of Fig. 1.
Fig. 6 is a schematic plan view showing a guide unit of the folding/laminating apparatus of Fig. 1.
Fig. 7 is a schematic plan view showing the guide unit of the folding/laminating apparatus of Fig. 1.
Fig. 8 is a schematic right-side view showing the guide unit of the folding/laminating apparatus of Fig. 1.
Fig. 9 is a view showing a laminated dough sheet due to a prior art folding/laminating apparatus.
Fig. 10 is a schematic right-side view showing a guide unit of an alternative folding/laminating apparatus.
Fig. 11 is a schematic front view showing a plurality of conveyors of the alternative folding/laminating apparatus.
Fig. 12 is a schematic plan view showing the guide unit of the alternative folding/laminating apparatus.
Fig. 13 is a schematic front view showing the plurality of conveyors of the alternative folding/laminating apparatus.
Fig. 14 is a schematic plan view showing the guide unit of the alternative folding/laminating apparatus.

### DESCRIPTION OF EMBODIMENTS

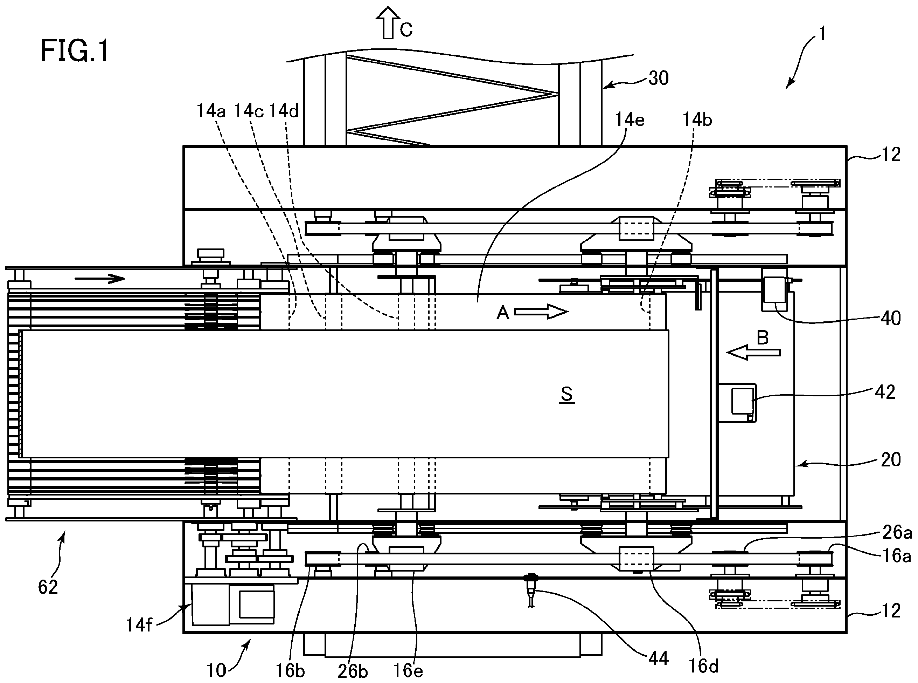

Referring to Figs. 1-8, an embodiment of a folding/laminating apparatus according to the present invention will be explained.

As shown in Figs. 1-2, a folding/laminating apparatus 1 has three belt conveyors, namely, an introducing conveyor 10, a laminating conveyor 20, and a discharging conveyor 30. The introducing conveyor 10 is located at an upper level and configured to receive a continuously-supplied dough sheet S and convey the dough sheet S in a first direction A. The laminating conveyor 20 is located at a middle level and configured to receive the dough sheet S from the introducing conveyor 10 and convey the dough sheet S in a second direction B opposite to the first direction A. The discharging conveyor 30 is located at a lower level and configured to receive the dough sheet S from the laminating conveyor 20 and convey the dough sheet S in a third direction C perpendicular to the first direction A. The first, second, and third directions A, B, C are substantially horizontal directions.

In this embodiment, on an upstream side of the introducing conveyor 10, a supplying conveyor 60 for continuously supplying the dough sheet S, and a conveyor 62 for brushing off excess flour adhering to upper and lower surfaces of the dough sheet S are arranged. Further, to prevent opposite ends of the dough sheet S from shrinking, an extending device (not shown) for extending the opposite ends of the dough sheet S is preferably arranged above the supplying conveyor 60. The extending device is, for example, an extending roller.

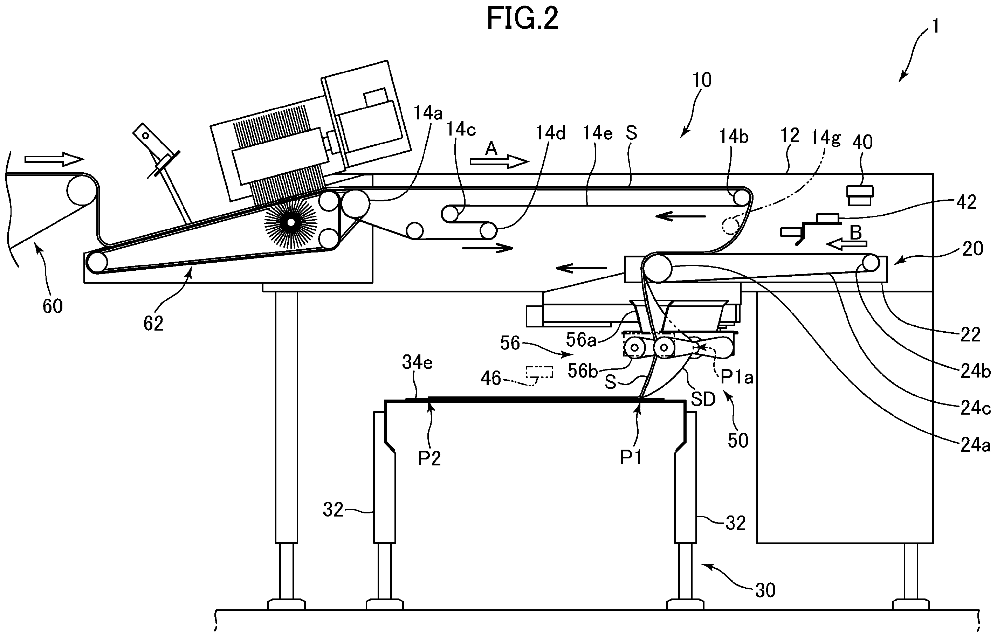

As shown in Fig. 2, the introducing conveyor 10 includes frames 12 on opposite sides, a drive roller 14a, a tip roller 14b, a turn roller 14c, a counter roller 14d, a conveyor belt 14e wound around these rollers 14a, 14b, 14c, 14d, and a drive unit 14f (see Fig. 1) for driving the drive roller 14a. The tip roller 14b defines a downstream end for delivering the dough sheet S onto the laminating conveyor 20.

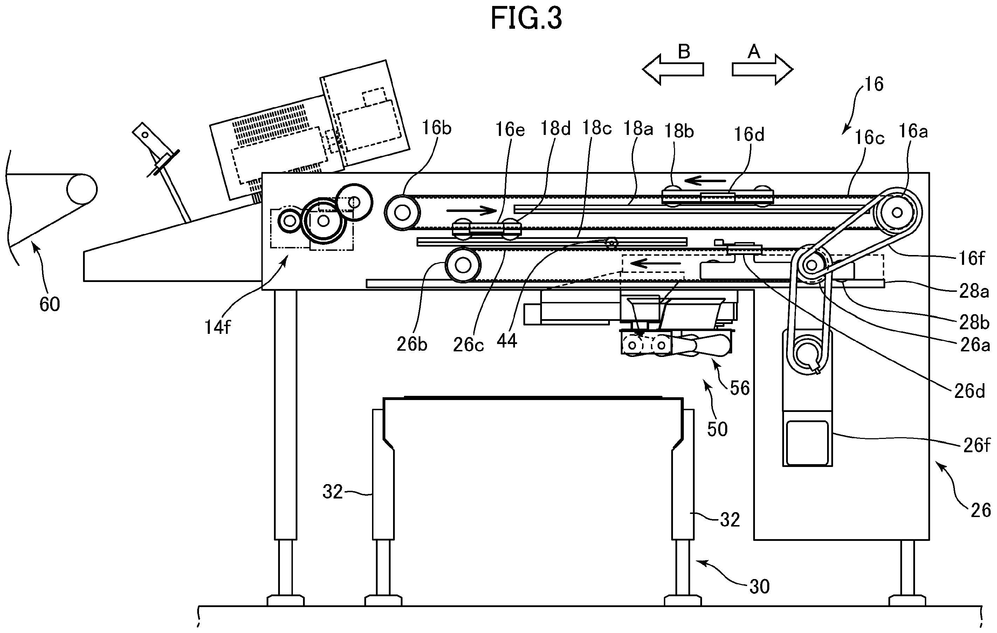

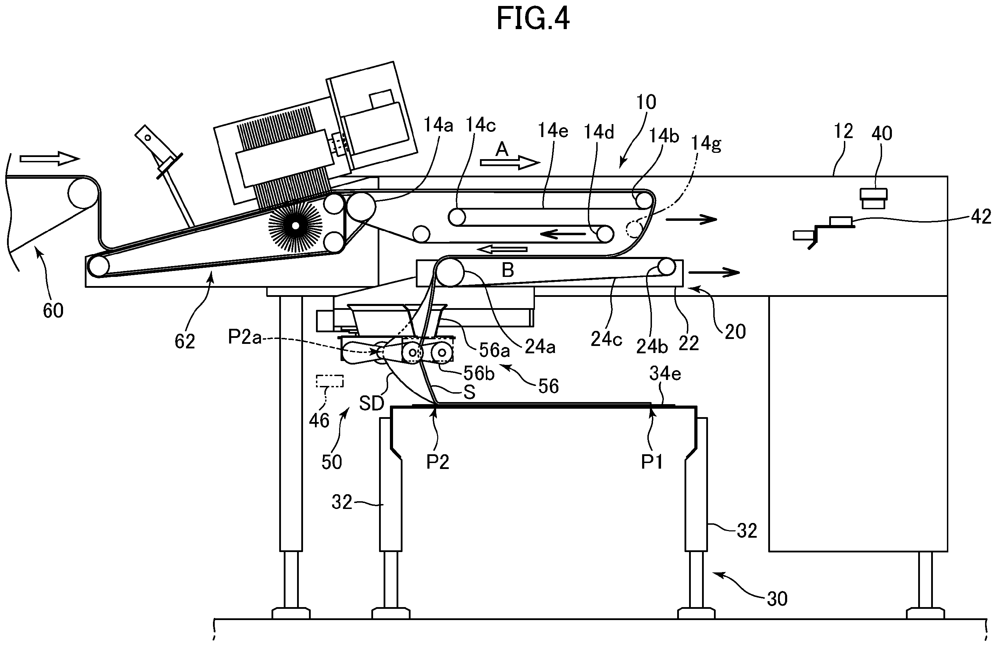

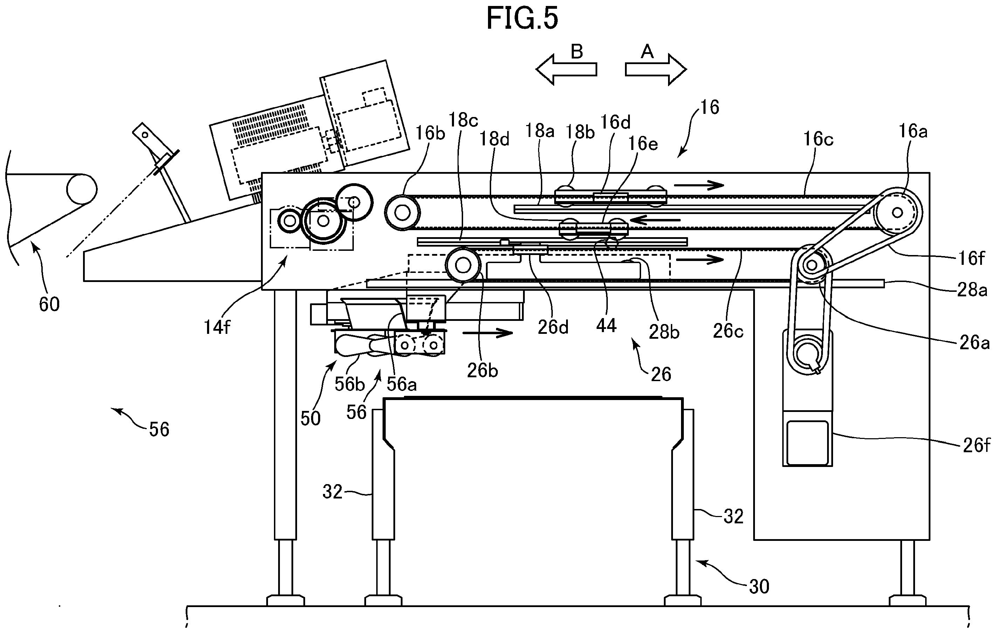

Further, as shown in Figs. 2 and 4, the tip roller 14b and the counter roller 14d are configured to be moved in the first and second directions A, B and in opposed directions relative to the frames 12. Specifically, as shown in Figs. 3 and 5, the introducing conveyor 10 includes a roller moving unit 16, which includes a drive pulley 16a, a driven pulley 16b, and a belt 16c wound around these pulleys 16a, 16b, an upper slider 16d secured to an upper running part of the belt 16c, a lower slider 16e secured to a lower running part of the belt 16c, and a drive unit 16f for driving the drive pulley 16a. The upper slider 16d is coupled to the tip roller 14b and rollers 18b which are movable on an upper rail 18a. The lower slider 16e is coupled to the counter roller 14d and rollers 18d which are movable on a lower rail 18c.

Additionally, a sensor 40 for detecting a position of the tip roller 14b, and a sensor 42 for detecting a position of the dough sheet S delivered from the introducing conveyor 10 onto the laminating conveyor 20 are attached to the frames 12. These sensors 40, 42 are used based on a difference between these detected positions to determine whether the dough sheet is stretched or loosened by the laminating conveyor.

As shown in Fig. 2, the laminating conveyor 20 includes frames 22 on opposite sides, a drive roller 24a, a driven roller 24b, a conveyor belt 24c wound around these rollers 24a, 24b, and a drive unit for driving the drive roller 24a (which drive unit is built into the drive roller 24a in this embodiment). In this embodiment, the drive roller 24a defines a downstream end which delivers the dough sheet S onto the discharging conveyor 30.

Further, as shown in Figs. 2 and 4, the laminating conveyor 20 is configured to be moved in the first and second directions A, B relative to the frames 12 of the introducing conveyor 10. Specifically, as shown in Figs. 3 and 5, the laminating conveyor 20 includes a conveyor moving unit 26 which includes a drive pulley 26a, a driven pulley 26b, and a belt 26c wound around these pulleys 26a, 26b, a slider 26d secured to an upper running part of the belt 26c, and a drive unit 26f for driving the drive pulley 26a. The slider 26d is coupled to the frames 22 of the laminating conveyor 20 and rollers 28b which are movable along a rail 28a. The drive unit 16f of the roller moving unit 16 and the drive unit 26f of the conveyor moving unit 26 are configured to coordinate so that the two drive pulleys 16a, 26a are rotated in the same direction.

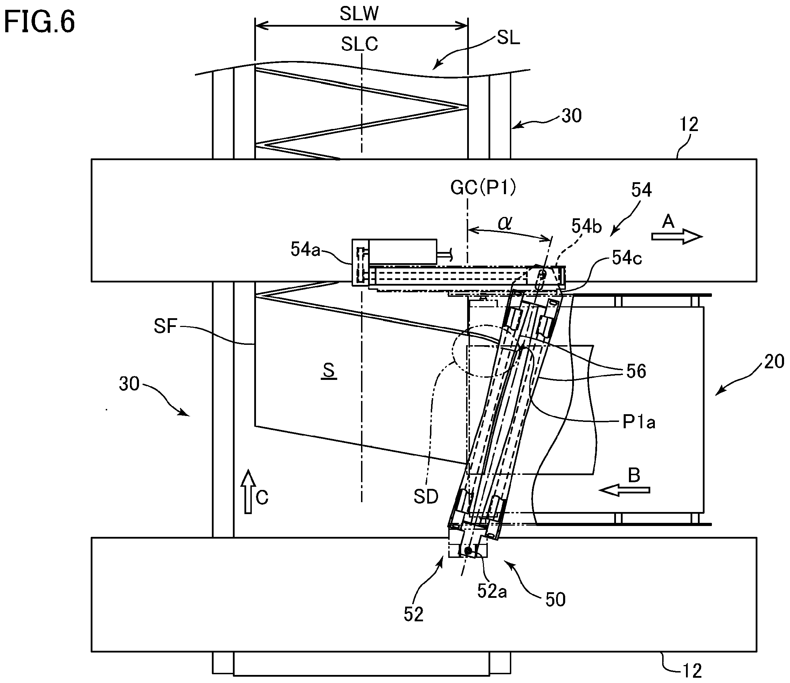

A sensor 44 is provided on the frame 12 of the introducing conveyor 10 for detecting that the downstream end (drive roller 24a) of the laminating conveyor 20 is located at a position corresponding to a center SLC of a folding width SLW of the laminated dough sheet SL. The center SLC of the folding width SLW (see Fig. 6) is generally the center of the discharging conveyor 30 in its width direction. Further, the drive unit 26f of the laminating conveyor 20 is configured to detect a moving distance of the laminating conveyor 20. This allows the laminating conveyor 20 to be configured to be reciprocated between a first folding position P1 and a second folding position P2 according to a predetermined (input) folding width SLW. The first folding position P1 is a position away from the center SLC of the folding width SLW in the first direction A by a half distance of the folding width SLW. The second folding position P2 is a position away from the center SLC of the folding width SLW in the second direction B by a half distance of the folding width SLW.

As shown in Fig. 2, the discharging conveyor 30 includes frames 32 on opposite sides, a conveyor belt 34e including a conveying surface moving in the third direction C, and a drive unit (not shown) for driving the conveyor belt 34e. The discharging conveyor 30 is preferably inclined downward in the third direction C. An inclined angle is, preferably, within a range from about 5 degrees to about 25 degrees, and, for example, 15 degrees. Since the discharging conveyor 30 is a known conveyor, detailed explanation thereof is omitted.

As shown in Figs. 2 and 4, the folding/laminating apparatus 1 further includes a guide unit 50 for guiding the dough sheet S when the dough sheet S is delivered from the laminating conveyor 20 onto the discharging conveyor 30. The guide unit 50 is located below the downstream end (drive roller 24a) of the laminating conveyor 20 and secured to the frames 22 of the laminating conveyor 20. Thus, the guide unit 50 is configured to be reciprocated together with the laminating conveyor 20.

As shown in Figs. 6-8, viewing in a third direction C which is the conveying direction of the discharging conveyor 30, the guide unit 50 includes an upstream support portion 52, a downstream support portion 54, and a pair of guide members 56 facing each other and extending between the upstream support portion 52 and the downstream support portion 54. The pair of guide members 56 is configured to allow the dough sheet S to pass through between the pair of guide members 56. In this embodiment, the guide members 56 are defined by upper guide plates 56a and lower guide rollers 56b.

The guide members 56 are configured to swing around a pivot 52a of the upstream support portion 52. Specifically, the upstream support portion 52 includes a bracket 52b secured to the frame 22 of the laminating conveyor 20, and a bracket 52c pivoting around the pivot 52a secured to the bracket 52b, and an upstream end of the guide members 56 are attached to the bracket 52c. The pivot 52a is preferably located at a downstream end (drive roller 24a) of the laminating conveyor 20.

The downstream support portion 54 includes a linear motor 54a which is secured to the frame 22 of the laminating conveyor 20, and a bracket 54c which is slidably attached to a slider 54b of the linear motor 54a and to which downstream ends of the guide members 56 are attached. Thus, the guide members 56 can swing in the first and second directions A, B by a predetermined angle α relative to a center position GC extending in the third direction. The predetermined angle α can be changed depending on the number of the laminated layers in the laminated dough sheet SL. For example, preferably, the predetermined angle α is decreased when the number of the laminated layers is increased, while the predetermined angle α is increased when the number of the laminated layers is decreased. This allows a setting operation of the folding/laminating apparatus to become easier when the number of the laminated layers is changed. The predetermined angle α is, for example, 15 degrees.

Next, an operation of the folding/laminating apparatus will be explained.

A continuous dough sheet S is introduced into the introducing conveyor 10 from the supplying conveyor 60 via the conveyor 62 for dusting off flour, and conveyed in the first direction A by the introducing conveyor 10. Then, the continuous dough sheet S is delivered downward from the tip roller 14b (downstream end) of the introducing conveyor 10 onto the laminating conveyor 20, and conveyed in the second direction B by the laminating conveyor 20. Then, the continuous dough sheet S is delivered downward from the drive roller 24a (downstream end) of the laminating conveyor 20 onto the discharging conveyor 30.

As shown in Figs. 2 and 6, the tip roller 14b of the introducing conveyor 10 and the laminating conveyor 20 are moved in the first direction A, and the drive roller 24a (downstream end) of the laminating conveyor 20 reaches the first folding position P1. At this time, the guide members 56 are moved in the first direction A beyond the center position GC. This allows the downstream-side edge portion SD of the dough sheet S to be moved in the first direction A to a position P1a beyond the first folding position P1 above the discharging conveyor 30.

Next, after the drive roller 24a (downstream end) of the laminating conveyor 20 is stopped at the first folding position P1 for a predetermined time period, the tip roller 14b of the introducing conveyor 10 and the laminating conveyor 20 are moved in the second direction B so that a folding line SF of the dough sheet S is formed, and the dough sheet S is folded. The downstream-side edge portion SD of the dough sheet S is pulled back toward the center SLC of the width of the laminated dough sheet SL, and the folding line SF is finally aligned with or disposed parallel to the third direction (discharging direction) C. After that, the guide members 56 are returned to the center position GC.

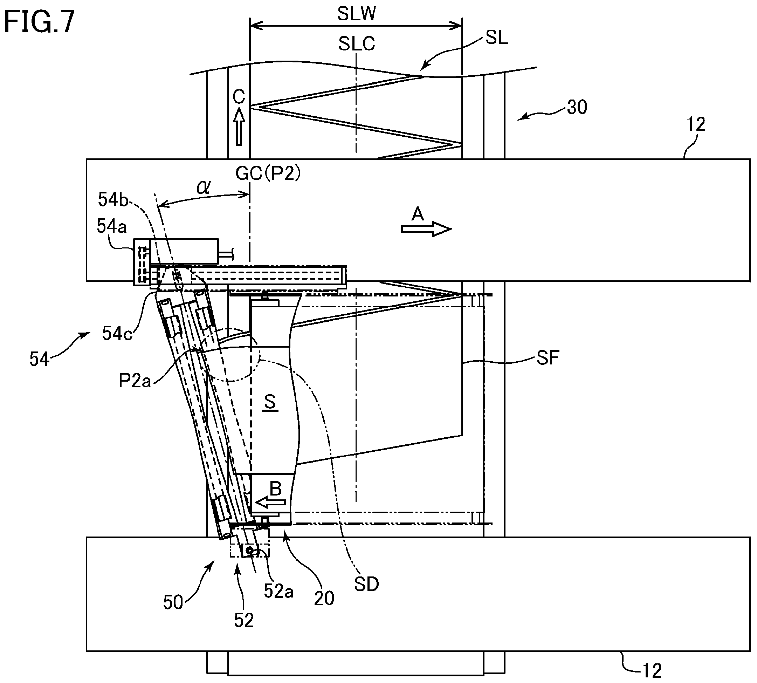

Further, as shown in Figs. 4 and 7, the tip roller 14b of the introducing conveyor 10 and the laminating conveyor 20 are moved in the second direction B, and the drive roller 24a (downstream end) of the laminating conveyor 20 reaches the second folding position P2. At this time, the guide members 56 are moved in the second direction B beyond the center position GC. This allows the downstream-side edge portion SD of the dough sheet S to be moved in the second direction B to a position P2a beyond the second folding position P2 above the discharging conveyor 30.

Next, after the drive roller 24a (downstream end) of the laminating conveyor 20 is stopped at the second folding position P2 for a predetermined time period, the tip roller 14b of the introducing conveyor 10 and the laminating conveyor 20 are moved in the first direction A so that a folding line SF of the dough sheet S is formed, and the dough sheet S is folded. The downstream-side edge portion SD of the dough sheet S is pulled back toward the center SLC of the width of the laminated dough sheet SL, and the folding line SF is finally aligned with or disposed parallel to the third direction (discharging direction) C. After that, the guide members 56 are returned to the center position GC.

By repeating these operations, the laminated dough sheet SL is formed. The laminated dough sheet SL is discharged in the third direction C by the discharging conveyor 30.

When the guide members 56 are moved as described above, a speed of the conveyor belt 24c of the laminating conveyor 20 is preferably increased. This prevents the dough sheet S delivered from the drive roller 24a (downstream end) of the laminating conveyor 20 from being excessively pulled by the guide members 56 and causing folding operations of the dough sheet S unstable. Further, when the drive roller 24a (downstream end) of the laminating conveyor 20 reaches the first folding position P1 and the second folding position P2, the speed of the conveyor belt 24c of the laminating conveyor 20 is preferably returned back to the original speed.

Further, preferably, the position of the dough sheet S relative to the position of the tip roller 14b is detected by the sensors 40, 42 so that a degree of the tension (curvature) of the dough sheet S is estimated, and a speed of the conveyor belt 14e of the introducing conveyor 10 is adjusted so that the position of the dough sheet S is within a predetermined range allowing a weak tension (large curvature) of the dough sheet S. For example, when the tension of the dough sheet S becomes strong, the speed of the conveyor belt 14e is increased, and when the position of the dough sheet S returns to within the predetermined range, the speed of the conveyor belt 14e of the introducing conveyor 10 is returned back to the original speed.

Although the embodiments of the folding/laminating apparatus according to the present invention have been described above, various modifications can be made, and are also included within the scope of the present invention.

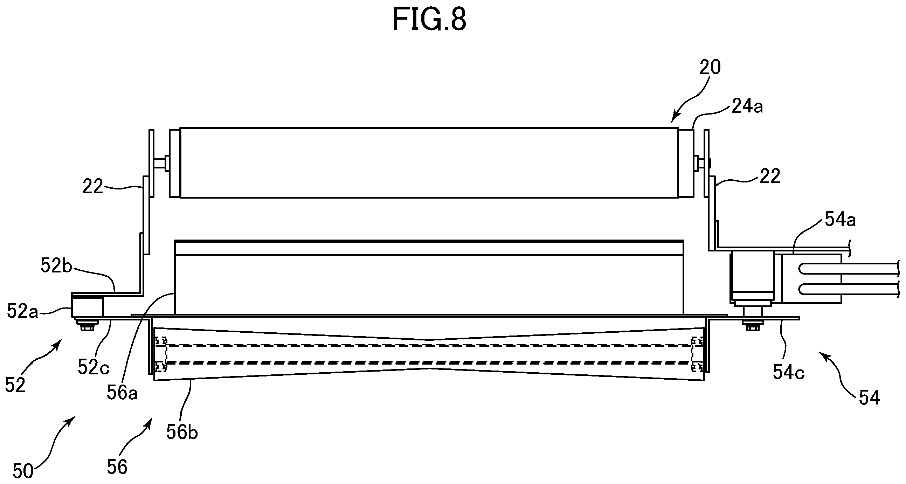

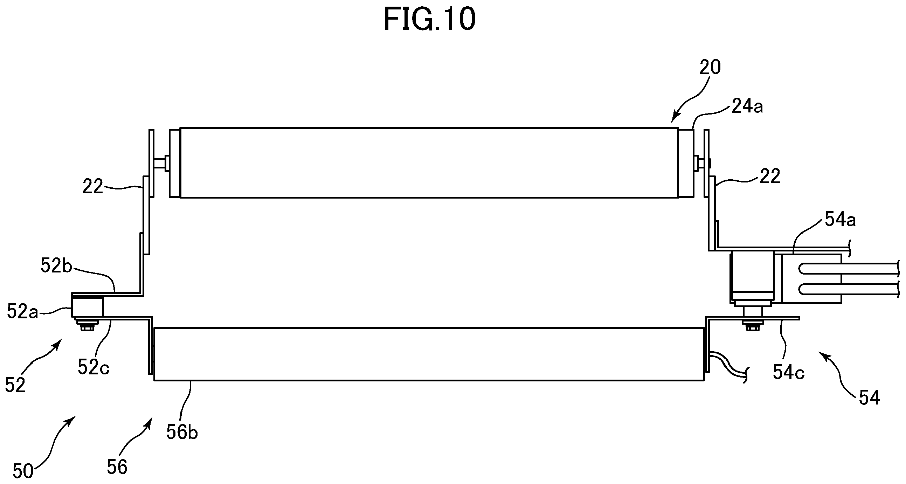

Although, in the above-explained embodiment, the guide members 56 include the pair of guide plates 56a and the pair of guide rollers 56b, any guide members 56 may be used as long as the downstream-side edge portion SD of the dough sheet S can be moved. For example, the pair of guide plates 56a may be omitted, or the pair of guide rollers 56b may be omitted. The pair of guide rollers 56b may be driven rollers or freely-rotating rollers. An outer diameter of the guide roller 56b may be constant (cylindrical shape (see Fig. 10)), or vary (for example, a shape with reduced middle portion (see Fig. 8)). Further, a length of the guide roller may be a length that receives the entire dough sheet S, or a portion of the dough sheet S (for example, the downstream-side edge portion SD).

As an alternative, a guide roller 14g (shown by imaginary lines in Figs. 2 and 4) may be provided below the tip roller 14b of the introducing conveyor 10 to guide the dough sheet S. For example, if the dough sheet S slides off from the laminating conveyor 20 due to own weight of the dough sheet S when the dough sheet S is delivered from the downstream end (drive roller 24a) of the laminating conveyor 20 onto the discharging conveyor 30, a condition that the dough sheet S is not substantially supported by the laminating conveyor 20 would be caused so that the folding operation of the dough sheet S could not be controlled. In this case, by providing such a guide roller 14g, the dough sheet S may be surely supported on the laminating conveyor 20. This allows the dough sheet S to be maintained in a curved (loose) condition.

As an alternative, a sensor 46 (shown by imaginary lines in Figs. 2 and 4) for detecting a degree of curvature (loose) of the dough sheet S may be provided below and integrally with the laminating conveyor 20, and the speed of the laminating conveyor 20 may be controlled. For example, when the dough sheet S is excessively loosed so that the laminated dough sheet SL becomes a concave and convex condition, the speed of the conveyor belt 24e of the laminating conveyor 20 is preferably decreased.

Although in the above-explained embodiment, the tip roller 14b (downstream end) of the introducing conveyor 10 is moved, the introducing conveyor 10 itself may be moved if the introducing conveyor 10 can receive the dough sheet S. Further, although in the above-explained embodiment, the laminating conveyor 20 itself is moved, only the downstream end of the laminating conveyor 20 may be configured to be moved.

Although, in the above-explained embodiment, the pair of guide members 56 is configured to swing around the pivot 52a of the upstream support portion 52, any arrangement may be employed as long as the downstream-side edge portion SD of the dough sheet S can be moved. For example, the upstream support portion 52 has a linear motor secured to the frame 22 of the laminating conveyor 20 like the downstream support portion 54, and the pivot 52a of the upstream support portion 52 may be moved in the first direction A or the second direction B.

The operations of the pair of guide members 56 are preferably changed depending on properties (behavior) of the dough sheet S. For example, a timing at which the guide members 56 start moving from the center position GC during the reciprocating operation of the laminating conveyor 20, a stop time period after the guide members 56 are moved, a timing at which the guide members 56 start returning to the center position GC, and a moving speed of the guide members 56 can be arbitrarily selected.

Next, another folding/laminating apparatus according to a preferable alternative is shown in Figs. 10-14. The folding/laminating apparatus according to the preferable alternative is defined by partially modifying the above-explained embodiment. Specifically, the guide members 56 are defined only by the guide rollers 56b, namely, the guide plates 56a are omitted. Further, the outer diameter of the guide roller 56b is constant, namely, the guide roller 56b has a cylindrical shape (see Fig. 10). The guide roller 56b is a driven roller (a roller with a drive mechanism). Further, the speed of the conveyor belt 24c of the laminating conveyor 20 is constant. Further, the guide roller 14g for guiding the dough sheet is provided below the tip roller 14b of the introducing conveyor 10. Further, a timing at which the guide members 56 start moving from the center position GC is changed during the reciprocating operation of the laminating conveyor 20.

Next, an operation of the folding/laminating apparatus according to the preferable alternative will be explained.

Similar to the above-explained embodiment, the continuous dough sheet S is introduced into the introducing conveyor 10 from the supplying conveyor 60 via the conveyor 62 for brushing off flour, and conveyed in the first direction A by the introducing conveyor 10. Then, the continuous dough sheet S is delivered downward from the tip roller 14b (downstream end) of the introducing conveyor 10 onto the laminating conveyor 20, and conveyed in the second direction B by the laminating conveyor 20. Then, the continuous dough sheet S is delivered downward from the drive roller 24a (downstream end) of the laminating conveyor 20 onto the discharging conveyor 30.

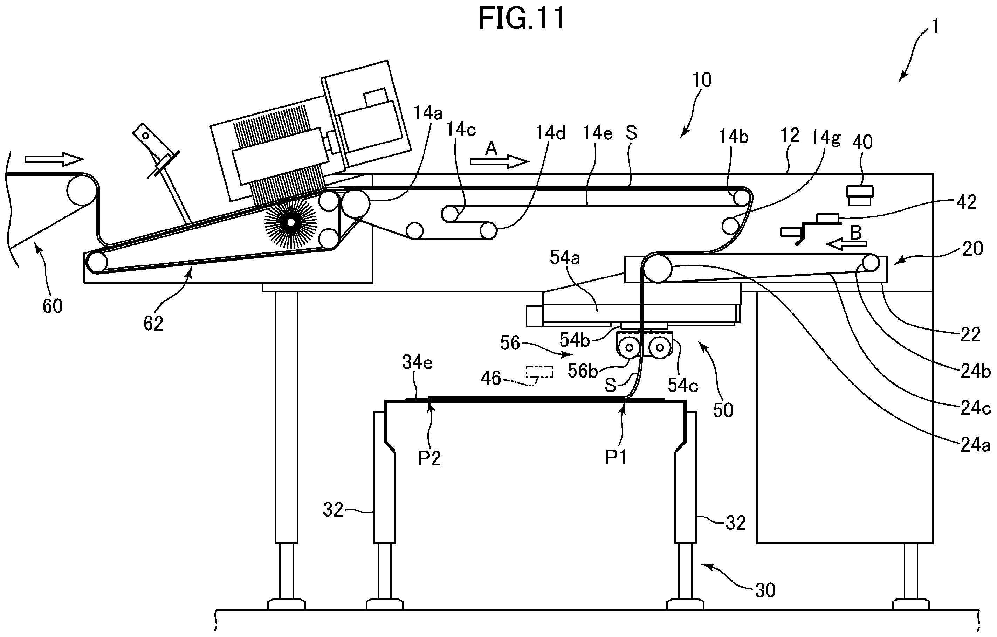

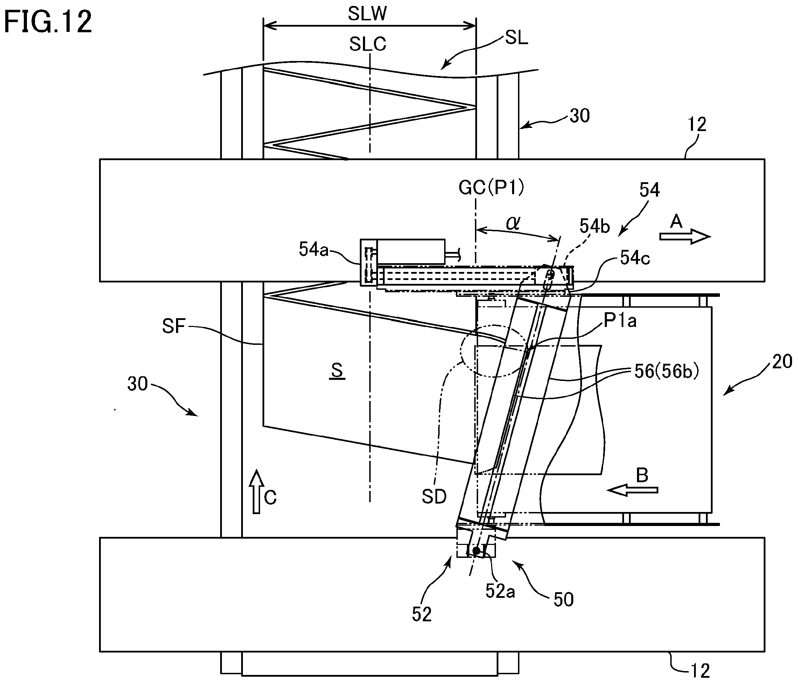

As shown in Fig. 11, the tip roller 14b of the introducing conveyor 10 and the laminating conveyor 20 are moved in the first direction A, and stopped when the drive roller 24a (downstream end) of the laminating conveyor 20 reaches the first folding position P1. After a predetermined time period has passed after the drive roller 24a is stopped, as shown in Fig. 12, the guide members 56 are moved in the first direction A from the center position GC. This allows the downstream-side edge portion SD of the dough sheet S to be moved in the first direction A to a position P1a beyond the first folding position P1 above the discharging conveyor 30.

Next, like the above-explained embodiment, after the drive roller 24a (downstream end) of the laminating conveyor 20 is stopped at the first folding position P1 for a predetermined time period, the tip roller 14b of the introducing conveyor 10 and the laminating conveyor 20 are moved in the second direction B so that the folding line SF of the dough sheet S is formed, and the dough sheet S is folded. The downstream-side edge portion SD of the dough sheet S is pulled back toward the center SLC of the width of the laminated dough sheet SL, and the folding line SF is finally aligned with or disposed parallel to the third direction (discharging direction) C. After that, the guide members 56 are returned to the center position GC.

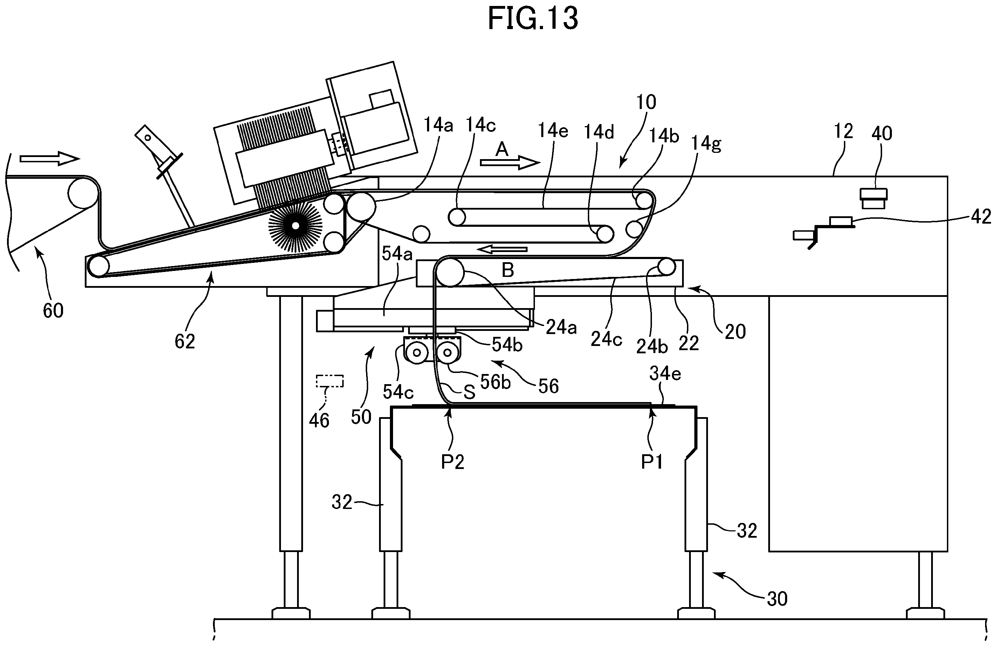

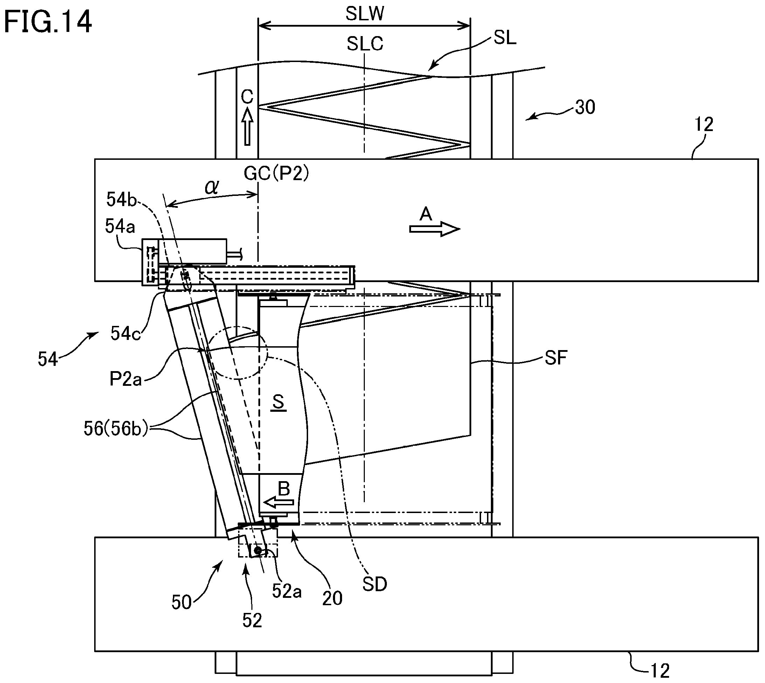

Further, as shown in Fig. 13, the tip roller 14b of the introducing conveyor 10 and the laminating conveyor 20 are moved in the second direction B, and stopped when the drive roller 24a (downstream end) of the laminating conveyor 20 reaches the second folding position P2. After a predetermined time period has passed after the drive roller 24a is stopped, as shown in Fig. 14, the guide members 56 are moved in the second direction B from the center position GC. This allows the downstream-side edge portion SD of the dough sheet S to be moved in the second direction B to a position P2a beyond the second folding position P2 above the discharging conveyor 30.

Next, like the above-explained embodiment, after the drive roller 24a (downstream end) of the laminating conveyor 20 is stopped at the second folding position P2 for a predetermined time period, the tip roller 14b of the introducing conveyor 10 and the laminating conveyor 20 are moved in the first direction A so that the folding line SF of the dough sheet S is formed, and the dough sheet S is folded. The downstream-side edge portion SD of the dough sheet S is pulled back toward the center SLC of the width of the laminated dough sheet SL, and the folding line SF is finally aligned with or disposed parallel to the third direction (discharging direction) C. After that, the guide members 56 are returned to the center position GC.

By repeating these operations, the laminated dough sheet SL is formed. The laminated dough sheet SL is discharged in the third direction C by the discharging conveyor 30.

In the preferred alternative, the speed of the conveyor belt 24c of the laminating conveyor 20 is constant. This alternative can also prevent the dough sheet S delivered from the drive roller 24a (downstream end) of the laminating conveyor 20 from being pulled excessively by the guide members 56 and causing folding operations of the dough sheet S unstable.
1: folding/laminating apparatus
10: introducing conveyor
14a: tip roller (downstream end)
14g: roller
20: laminating conveyor
24a: drive roller (downstream end)
24c: conveyor belt
30: discharging conveyor
50: guide unit
56: a pair of guide members
40, 42: sensor
46: sensor
A: first direction (direction opposite to a conveying direction)
B: second direction (conveying direction)
C: third direction (discharging direction)
S: dough sheet
SD: downstream-side edge portion
SL: laminated dough sheet
P 1: first folding position
P2: second folding position

## Claims

1. A folding/laminating apparatus (1) that laminates a dough sheet (S) by folding the dough sheet (S), comprising:
a laminating conveyor (20) which conveys a continuous dough sheet (S) in a conveying direction (B) and includes a downstream end (24a);
a discharging conveyor (30) which is disposed below the laminating conveyor (20), receives the continuous dough sheet (S) from the downstream end (24a) of the laminating conveyor (20), and discharges a laminated dough sheet (SL) in a discharging direction (C) perpendicular to the conveying direction (B), the downstream end (24a) of the laminating conveyor (20) being configured to be reciprocated in the conveying direction (B) and a direction (A) opposite to the conveying direction (B) between a first folding position (P1) and a second folding position (P2) so that the continuous dough sheet (S) is folded onto the discharging conveyor (30) to form the laminated dough sheet (SL) on the discharging conveyor (30); and
a guide unit (50) which is reciprocated together with the downstream end (24a) of the laminating conveyor (20), and includes a pair of guide members (56) for guiding the continuous dough sheet (S) from the downstream end (24a) of the laminating conveyor (20) onto the discharging conveyor (30), the pair of guide members (56) being configured to allow a downstream-side edge portion (SD) of the continuous dough sheet (S) to pass between the pair of guide members (56);
wherein the guide unit (50) is configured to move the pair of guide members (56) in the direction (A) opposite to the conveying direction (B) beyond the first folding position (P1) to move the downstream-side edge portion (SD) of the continuous dough sheet (S) in the direction (A) opposite to the conveying direction (B) beyond the first folding position (P1) when the downstream end (24a) of the laminating conveyor (20) is moved in the direction (A) opposite to the conveying direction (B) and reaches the first folding position (P1), and
wherein the guide unit (50) is configured to move the pair of guide members (56) in the conveying direction (B) beyond the second folding position (P2) to move the downstream-side edge portion (SD) of the continuous dough sheet (S) in the conveying direction (B) beyond the second folding position (P2) when the downstream end (24a) of the laminating conveyor (20) is moved in the conveying direction (B) and reaches the second folding position (P2).

2. The folding/laminating apparatus (1) according to claim 1,
wherein the guide unit (50) is configured to move the pair of guide members (56) in the direction (A) opposite to the conveying direction (B) after the downstream end (24a) of the laminating conveyor (20) reaches and is stopped at the first folding position (P1), and
wherein the guide unit (50) is configured to move the pair of guide members (56) in the direction (B) after the downstream end (24a) of the laminating conveyor (20) reaches and is stopped at the second folding position (P2).

3. The folding/laminating apparatus (1) according to claim 1,
wherein the laminating conveyor (20) is configured to make a speed of a conveyor belt (24c) of the laminating conveyor (20) constant when the pair of guide members (56) is moved for moving the downstream-side edge portion (SD) of the continuous dough sheet (S) in the direction (A) opposite to the conveying direction (B) beyond the first folding position (P1) and in the conveying direction (B) beyond the second folding position (P2).

4. The folding/laminating apparatus (1) according to claim 1,
wherein the laminating conveyor (20) is configured to increase a speed of a conveyor belt (24c) of the laminating conveyor (20) when the pair of guide members (56) is moved for moving the downstream-side edge portion (SD) of the continuous dough sheet (S) in the direction (A) opposite to the conveying direction (B) beyond the first folding position (P1) and in the conveying direction (B) beyond the second folding position (P2).

5. The folding/laminating apparatus (1) according to claim 1, further comprising:
an introducing conveyor (10) which is disposed above the laminating conveyor (20) and conveys the continuous dough sheet (S) in the direction (A) opposite to the conveying direction (B), wherein the introducing conveyor (10) has a downstream end (14a) and is configured to deliver the continuous dough sheet (S) from the downstream end (14a) of the introducing conveyor (10) onto the laminating conveyor (20).

6. The folding/laminating apparatus (1) according to claim 5, further comprising:
a sensor (42) for detecting a position of the continuous dough sheet (S) in the conveying direction (B) when the continuous dough sheet (S) is delivered from the downstream end (14a) of the introducing conveyor (10) onto the laminating conveyor (20).

7. The folding/laminating apparatus (1) according to claim 5, further comprising:
a roller (14g) between the downstream end (14a) of the introducing conveyor (10) and the laminating conveyor (20) for maintaining a position of the continuous dough sheet (S) in the conveying direction (B) when the continuous dough sheet (S) is delivered from the downstream end (14a) of the introducing conveyor (10) onto the laminating conveyor (20).

8. The folding/laminating apparatus (1) according to claim 3 or 4, further comprising:
a sensor (46) for detecting a position of the continuous dough sheet (S) in the conveying direction (B) when the continuous dough sheet (S) is delivered from the downstream end (24a) of the laminating conveyor (20) onto the discharging conveyor (30).

9. The folding/laminating apparatus (1) according to claim 1, wherein the pair of guide members (56) includes a pair of guide rollers (56b).

10. The folding/laminating apparatus (1) according to claim 9, wherein each of the pair of guide rollers (56b) is a driven roller.

11. The folding/laminating apparatus (1) according to claim 1, wherein the pair of guide members (56) includes a pair of guide plates (56a).

## Patentansprüche

1. Falt-/Laminiervorrichtung (1), die ein Teigblatt (S) durch Falten des Teigblatts (S) laminiert, umfassend:
einen Laminierförderer (20), der ein kontinuierliches Teigblatt (S) in einer Förderrichtung (B) fördert und ein stromabwärtiges Ende (24a) aufweist;
einen Abförderer (30), der unterhalb des Laminierförderers (20) angeordnet ist, das kontinuierliche Teigblatt (S) von dem stromabwärtigen Ende (24a) des Laminierförderers (20) aufnimmt und ein laminiertes Teigblatt (SL) in einer Abförderrichtung (C) senkrecht zur Förderrichtung (B) abfördert, wobei das stromabwärtige Ende (24a) des Laminierförderers (20) dazu eingerichtet ist, in der Förderrichtung (B) und einer der Förderrichtung (B) entgegengesetzten Richtung (A) zwischen einer ersten Faltposition (P1) und einer zweiten Faltposition (P2) hin- und herbewegt zu werden, sodass das kontinuierliche Teigblatt (S) auf den Abförderer (30) gefaltet wird, um das laminierte Teigblatt (SL) auf dem Abförderer (30) zu bilden; und
eine Führungseinheit (50), die zusammen mit dem stromabwärtigen Ende (24a) des Laminierförderers (20) hin- und herbewegt wird und ein Paar von Führungselementen (56) zum Führen des kontinuierlichen Teigblatts (S) von dem stromabwärtigen Ende (24a) des Laminierförderers (20) auf den Abförderer (30) umfasst, wobei das Paar von Führungselementen (56) dazu eingerichtet ist, einem stromabwärtsseitigen Randabschnitt (SD) des kontinuierlichen Teigblatts (S) ein Durchlaufen zwischen dem Paar von Führungselementen (56) zu ermöglichen;
wobei die Führungseinheit (50) dazu eingerichtet ist, das Paar von Führungselementen (56) in der der Förderrichtung (B) entgegengesetzten Richtung (A) über die erste Faltposition (P1) hinaus zu bewegen, um den stromabwärtsseitigen Randabschnitt (SD) des kontinuierlichen Teigblatts (S) in der der Förderrichtung (B) entgegengesetzten Richtung (A) über die erste Faltposition (P1) hinaus zu bewegen, wenn das stromabwärtige Ende (24a) des Laminierförderers (20) in der der Förderrichtung (B) entgegengesetzten Richtung (A) bewegt wird und die erste Faltposition (P1) erreicht, und
wobei die Führungseinheit (50) dazu eingerichtet ist, das Paar von Führungselementen (56) in der Förderrichtung (B) über die zweite Faltposition (P2) hinaus zu bewegen, um den stromabwärtsseitigen Randabschnitt (SD) des kontinuierlichen Teigblatts (S) in der Förderrichtung (B) über die zweite Faltposition (P2) hinaus zu bewegen, wenn das stromabwärtige Ende (24a) des Laminierförderers (20) in der Förderrichtung (B) bewegt wird und die zweite Faltposition (P2) erreicht.

2. Falt-/Laminiervorrichtung (1) nach Anspruch 1,
wobei die Führungseinheit (50) dazu eingerichtet ist, das Paar von Führungselementen (56) in der der Förderrichtung (B) entgegengesetzten Richtung (A) zu bewegen, nachdem das stromabwärtige Ende (24a) des Laminierförderers (20) die erste Faltposition (P1) erreicht hat und an dieser angehalten worden ist, und
wobei die Führungseinheit (50) dazu eingerichtet ist, das Paar von Führungselementen (56) in der Richtung (B) zu bewegen, nachdem das stromabwärtige Ende (24a) des Laminierförderers (20) die zweite Faltposition (P2) erreicht hat und an dieser angehalten worden ist.

3. Falt-/Laminiervorrichtung (1) nach Anspruch 1,
wobei der Laminierförderer (20) dazu eingerichtet ist, eine Geschwindigkeit eines Förderbands (24c) des Laminierförderers (20) konstant zu halten, wenn das Paar von Führungselementen (56) bewegt wird, um den stromabwärtsseitigen Randabschnitt (SD) des kontinuierlichen Teigblatts (S) in der der Förderrichtung (B) entgegengesetzten Richtung (A) über die erste Faltposition (P1) hinaus und in der Förderrichtung (B) über die zweite Faltposition (P2) hinaus zu bewegen.

4. Falt-/Laminiervorrichtung (1) nach Anspruch 1,
wobei der Laminierförderer (20) dazu eingerichtet ist, eine Geschwindigkeit eines Förderbands (24c) des Laminierförderers (20) zu erhöhen, wenn das Paar von Führungselementen (56) bewegt wird, um den stromabwärtsseitigen Randabschnitt (SD) des kontinuierlichen Teigblatts (S) in der der Förderrichtung (B) entgegengesetzten Richtung (A) über die erste Faltposition (P1) hinaus und in der Förderrichtung (B) über die zweite Faltposition (P2) hinaus zu bewegen.

5. Falt-/Laminiervorrichtung (1) nach Anspruch 1, ferner umfassend:
einen Zuführförderer (10), der oberhalb des Laminierförderers (20) angeordnet ist und das kontinuierliche Teigblatt (S) in der der Förderrichtung (B) entgegengesetzten Richtung (A) fördert, wobei der Zuführförderer (10) ein stromabwärtiges Ende (14a) aufweist und dazu eingerichtet ist, das kontinuierliche Teigblatt (S) von dem stromabwärtigen Ende (14a) des Zuführförderers (10) auf den Laminierförderer (20) abzugeben.

6. Falt-/Laminiervorrichtung (1) nach Anspruch 5, ferner umfassend:
einen Sensor (42) zum Erfassen einer Position des kontinuierlichen Teigblatts (S) in der Förderrichtung (B), wenn das kontinuierliche Teigblatt (S) von dem stromabwärtigen Ende (14a) des Zuführförderers (10) auf den Laminierförderer (20) abgegeben wird.

7. Falt-/Laminiervorrichtung (1) nach Anspruch 5, ferner umfassend:
eine Walze (14g) zwischen dem stromabwärtigen Ende (14a) des Zuführförderers (10) und dem Laminierförderer (20) zum Aufrechterhalten einer Position des kontinuierlichen Teigblatts (S) in der Förderrichtung (B), wenn das kontinuierliche Teigblatt (S) von dem stromabwärtigen Ende (14a) des Zuführförderers (10) auf den Laminierförderer (20) abgegeben wird.

8. Falt-/Laminiervorrichtung (1) nach Anspruch 3 oder 4, ferner umfassend:
einen Sensor (46) zum Erfassen einer Position des kontinuierlichen Teigblatts (S) in der Förderrichtung (B), wenn das kontinuierliche Teigblatt (S) von dem stromabwärtigen Ende (24a) des Laminierförderers (20) auf den Abförderer (30) abgegeben wird.

9. Falt-/Laminiervorrichtung (1) nach Anspruch 1, wobei das Paar von Führungselementen (56) ein Paar von Führungswalzen (56b) umfasst.

10. Falt-/Laminiervorrichtung (1) nach Anspruch 9, wobei jede des Paars von Führungswalzen (56b) eine angetriebene Walze ist.

11. Falt-/Laminiervorrichtung (1) nach Anspruch 1, wobei das Paar von Führungselementen (56) ein Paar von Führungsplatten (56a) umfasst.

## Revendications

1. Appareil de pliage/stratification (1) qui lamine une feuille de pâte (S) en pliant la feuille de pâte (S), comprenant :
un convoyeur de laminage (20) qui transporte une feuille de pâte continue (S) dans une direction de transport (B) et comprend une extrémité aval (24a) ;
un convoyeur d'évacuation (30) qui est disposé au-dessous du convoyeur de laminage (20), reçoit la feuille de pâte continue (S) depuis l'extrémité aval (24a) du convoyeur de laminage (20), et évacue une feuille de pâte laminée (SL) dans une direction d'évacuation (C) perpendiculaire à la direction de transport (B), l'extrémité aval (24a) du convoyeur de laminage (20) étant configurée pour effectuer un mouvement de va-et-vient dans la direction de transport (B) et dans une direction (A) opposée à la direction de transport (B) entre une première position de pliage (P1) et une deuxième position de pliage (P2) de sorte que la feuille de pâte continue (S) est pliée sur le convoyeur d'évacuation (30) pour former la feuille de pâte laminée (SL) sur le convoyeur d'évacuation (30) ; et
une unité de guidage (50) qui effectue un mouvement de va-et-vient conjointement avec l'extrémité aval (24a) du convoyeur de laminage (20), et comprend une paire d'éléments de guidage (56) pour guider la feuille de pâte continue (S) depuis l'extrémité aval (24a) du convoyeur de laminage (20) sur le convoyeur d'évacuation (30), la paire d'éléments de guidage (56) étant configurée pour permettre à une portion de bord côté aval (SD) de la feuille de pâte continue (S) de passer entre la paire d'éléments de guidage (56) ;
dans lequel l'unité de guidage (50) est configurée pour déplacer la paire d'éléments de guidage (56) dans la direction (A) opposée à la direction de transport (B) au-delà de la première position de pliage (P1) afin de déplacer la portion de bord côté aval (SD) de la feuille de pâte continue (S) dans la direction (A) opposée à la direction de transport (B) au-delà de la première position de pliage (P1) lorsque l'extrémité aval (24a) du convoyeur de laminage (20) est déplacée dans la direction (A) opposée à la direction de transport (B) et atteint la première position de pliage (P1), et
dans lequel l'unité de guidage (50) est configurée pour déplacer la paire d'éléments de guidage (56) dans la direction de transport (B) au-delà de la deuxième position de pliage (P2) afin de déplacer la portion de bord côté aval (SD) de la feuille de pâte continue (S) dans la direction de transport (B) au-delà de la deuxième position de pliage (P2) lorsque l'extrémité aval (24a) du convoyeur de laminage (20) est déplacé dans la direction de transport (B) et atteint la deuxième position de pliage (P2).

2. Appareil de pliage/stratification (1) selon la revendication 1,
dans lequel l'unité de guidage (50) est configurée pour déplacer la paire d'éléments de guidage (56) dans la direction (A) opposée à la direction de transport (B) après que l'extrémité aval (24a) du convoyeur de laminage (20) a atteint la première position de pliage (P1) et a été arrêtée à celle-ci, et
dans lequel l'unité de guidage (50) est configurée pour déplacer la paire d'éléments de guidage (56) dans la direction (B) après que l'extrémité aval (24a) du convoyeur de laminage (20) a atteint la deuxième position de pliage (P2) et a été arrêtée à celle-ci.

3. Appareil de pliage/stratification (1) selon la revendication 1,
dans lequel le convoyeur de laminage (20) est configuré pour maintenir constante une vitesse d'une bande transporteuse (24c) du convoyeur de laminage (20) lorsque la paire d'éléments de guidage (56) est déplacée pour déplacer la portion de bord côté aval (SD) de la feuille de pâte continue (S) dans la direction (A) opposée à la direction de transport (B) au-delà de la première position de pliage (P1) et dans la direction de transport (B) au-delà de la deuxième position de pliage (P2).

4. Appareil de pliage/stratification (1) selon la revendication 1,
dans lequel le convoyeur de laminage (20) est configuré pour augmenter une vitesse d'une bande transporteuse (24c) du convoyeur de laminage (20) lorsque la paire d'éléments de guidage (56) est déplacée pour déplacer la portion de bord côté aval (SD) de la feuille de pâte continue (S) dans la direction (A) opposée à la direction de transport (B) au-delà de la première position de pliage (P1) et dans la direction de transport (B) au-delà de la deuxième position de pliage (P2).

5. Appareil de pliage/stratification (1) selon la revendication 1, comprenant en outre :
un convoyeur d'introduction (10) qui est disposé au-dessus du convoyeur de laminage (20) et transporte la feuille de pâte continue (S) dans la direction (A) opposée à la direction de transport (B), dans lequel le convoyeur d'introduction (10) présente une extrémité aval (14a) et est configuré pour délivrer la feuille de pâte continue (S) depuis l'extrémité aval (14a) du convoyeur d'introduction (10) sur le convoyeur de laminage (20).

6. Appareil de pliage/stratification (1) selon la revendication 5, comprenant en outre :
un capteur (42) pour détecter une position de la feuille de pâte continue (S) dans la direction de transport (B) lorsque la feuille de pâte continue (S) est délivrée depuis l'extrémité aval (14a) du convoyeur d'introduction (10) sur le convoyeur de laminage (20).

7. Appareil de pliage/stratification (1) selon la revendication 5, comprenant en outre :
un rouleau (14g) entre l'extrémité aval (14a) du convoyeur d'introduction (10) et le convoyeur de laminage (20) pour maintenir une position de la feuille de pâte continue (S) dans la direction de transport (B) lorsque la feuille de pâte continue (S) est délivrée depuis l'extrémité aval (14a) du convoyeur d'introduction (10) sur le convoyeur de laminage (20).

8. Appareil de pliage/stratification (1) selon la revendication 3 ou 4, comprenant en outre :
un capteur (46) pour détecter une position de la feuille de pâte continue (S) dans la direction de transport (B) lorsque la feuille de pâte continue (S) est délivrée depuis l'extrémité aval (24a) du convoyeur de laminage (20) sur le convoyeur d'évacuation (30).

9. Appareil de pliage/stratification (1) selon la revendication 1, dans lequel la paire d'éléments de guidage (56) comprend une paire de rouleaux de guidage (56b).

10. Appareil de pliage/stratification (1) selon la revendication 9, dans lequel chacun de la paire de rouleaux de guidage (56b) est un rouleau entraîné.

11. Appareil de pliage/stratification (1) selon la revendication 1, dans lequel la paire d'éléments de guidage (56) comprend une paire de plaques de guidage (56a).
